# NOUVEAU FASCICULE DE BREVET EUROPEEN

(11) **EP 0 863 329 B2**
(45) Date de publication et mention de la décision concernant l'opposition: **02.08.2006**
(45) Mention de la délivrance du brevet: 09.10.2002
(21) Numéro de dépôt: 98103265.9
(22) Date de dépôt: 25.02.1998
(51) Int. Cl.: F16D 69/02

(54) **Garniture de frottement destinée à équiper un dispositif mettant en oeuvre un frottement à sec, procédé de fabrication d'une telle garniture de frottement et disque de friction d'embrayage équipé d'une telle garniture**
Reibbelag für trocknes Reibungssystem, Verfahren zur Herstellung solchen Reibbelag und der damit ausgerüsteten Kupplungsscheibe
Friction lining for a dry friction system, process for manufacturing and clutch disc provided with this lining

(30) Priorité: 06.03.1997 FR 9702779
(43) Date de publication de la demande: 09.09.1998
(73) Titulaire: VALEO, 75017 Paris (FR)
(72) Inventeur: Adamczak, Loîc, 61800 Montsecret (FR); Guerin, Richard, 61100 Ronfeugerai (FR); Kierbel, David, 14000 Caen (FR); Legrand, Claude, 14110 Conde Sur Noireau (FR)
(74) Mandataire: Lemaire, Marc

(56) Documents cités:
- DE-A- 1 905 119
- DE-A- 2 014 540
- DE-A- 4 206 321
- DE-B- 1 600 043
- DE-C- 2 460 020
- FR-A- 2 717 820
- FR-A- 2 735 830
- JP-A- 6 193 662
- JP-A- 62 255 633
- US-A- 2 175 399
- US-A- 2 403 674
- US-A- 3 365 041

## Description

La présente invention a pour objet une garniture de frottement destinée à équiper un dispositif mettant en oeuvre un frottement sec, de forme générale annulaire plate et du type comportant un corps annulaire plat en matériau de frottement délimité par des surfaces cylindriques intérieure et extérieure.

L'invention concerne aussi un procédé de réalisation d'une telle garniture de frottement ainsi qu'un disque de friction d'embrayage tournant mettant en oeuvre un frottement à sec et comportant au moins une garniture de frottement conforme aux enseignements de l'invention.

On connaît de nombreux exemples de telles garnitures annulaires de frottement se présentant sous la forme d'un anneau plat et qui sont utilisées pour équiper un disque d'embrayage, ou un disque de frein, mettant en oeuvre un frottement à sec.

Chaque garniture de frottement se présentant sous la forme d'un anneau plat est réalisée sous la forme d'une ébauche qui subit une opération finale de cuisson afin d'obtenir une polymérisation de certains de ces composants, éventuellement suivie d'une opération de post-cuisson.

L'ébauche annulaire plate peut, selon différentes techniques connues, être par exemple constituée de fils imprégnés d'une résine thermodurcissable et qui sont coupés à des longueurs variables comprises entre 5 et 30 mm, l'ébauche étant préformée dans un moule.

Elle peut aussi être constituée à base de fils imprégnés et tressés, la longueur de la tresse correspondant au diamètre extérieur de l'ébauche.

L'ébauche peut être constituée par des fils imprégnés et tissés pour obtenir une bande de tissu dont la longueur correspond au diamètre extérieur de l'ébauche.

L'ébauche peut être réalisée à partir de fils imprégnés qui sont enroulés sur un mandrin au diamètre intérieur de l'ébauche, le tube ainsi obtenu par enroulement étant ensuite découpé en tranches pour réaliser autant d'ébauches annulaires plates que de tranches découpées.

Enfin, l'ébauche peut être réalisée à partir de fils imprégnés qui sont enroulés en superposant des lobes correspondant au diamètre extérieur de l'ébauche.

Toutes ces méthodes de fabrication d'ébauches qui viennent d'être mentionnées ont pour principal inconvénient qu'elles aboutissent à la production de garnitures annulaires de frottement qui présentent une résistance insuffisante au phénomène de centrifugation, et notamment à chaud.

Le phénomène de rupture en centrifugation est en général dû au fait que la contrainte tangentielle maximale au niveau du bord cylindrique intérieur de la garniture en forme de couronne dépasse la contrainte de rupture en traction du matériau de frottement qui la constitue.

Le document US 3,365,041, divulgue une garniture de friction comportant sur sa face arrière, opposee à celle destinée à frotter, un élément de renfort pour la tenue en centrifugation. Cet élément de renfort s'étend principalement sur toute la face arrière de la garniture. Cette disposition à pour inconvénient d'une part, d'augmenter considérablement le coût de fabrication de la garniture et d'autre part, d'augmenter l'inertie de ladite garniture. Le document DE-B-1600043, conforme au préambule de la revendication 1, propose d'utiliser comme élément de renfort une zone annulaire interne constituée d'un tissu de fibres de verre.

L'invention a pour objet de proposer une nouvelle conception d'une garniture de frottement du type mentionné précédemment qui ne présente pas les inconvénients de l'art antérieur.

Dans ce but, l'invention propose une garniture de frottement telle que définie dans la revendication 1.

Selon d'autres caractéristiques de l'invention prises indépendamment ou dans toutes leurs combinaisons techniquement possibles :
- la zone annulaire de renfort est agencée au voisinage de la surface cylindrique intérieure de la garniture
- elle comporte plusieurs zones annulaires de renfort agencées sensiblement concentriquement ;
- les zones annulaires de renfort sont agencées sensiblement concentriquement à partir du voisinage de la surface cylindrique intérieure de la garniture ;
- elle comporte plusieurs zones annulaires de renfort agencées sensiblement concentriquement et réparties sur la totalité de la garniture entre les surfaces cylindriques intérieure et extérieure de cette dernière ;
- les zones annulaires de renfort sont réalisées dans un matériau de même densité ;
- les zones annulaires de renfort sont réalisées dans des matériaux de densités différentes ;
- les zones annulaires de renfort sont réalisées dans des matériaux de densités différentes et décroissantes à partir du voisinage de la surface cylindrique intérieure de la garniture ;
- chaque zone annulaire de renfort est un anneau de renfortformé d'une couche cylindrique sensiblement annulaire insérée dans le corps annulaire plat ;
- la garniture de frottement est réalisée à partir d'un mat de fibres imprégné d'une résine thermodurcissable;
- lesdites fibres présentent une longueur comprise entre 40 mm et 120 mm ;
- les fibres sont choisies parmi le groupe des fibres de coton, de viscose, de lin, de de polyacrylonitrile préoxydées, de para-aramide, de méta-aramide, des fibres minérales : verre E-C-R, laine de roche, céramique ;
- du verre est incorporé au mat sous forme de silionne, et/ou de roving, et/ou texturisé ou voluminisé ;
- les diamètres de fibres de verre sont compris entre 6 et 21 micromètres ;
- les fibres de verre ont subi un adhérisage, une imprégnation de résine phénolique, une imprégnation de caoutchouc ;
- des charges poudreuses sont incorporées au mat, elles comprennent tout ou partie des éléments ou composés suivants : cuivre, laine de roche, caoutchouc nitrile en poudre, noir de carbone, hexaméthylène tétramine, gilsonite, litharge, résine mélamine, résine phénolique, soufre, cardolite, silicate de zirconium, sulfure de fer, alumine, latex, garnitures d'embrayages usagées réduites en poudre, poussières de rectification de garnitures de frottement, oxyde de zinc.

L'invention propose aussi un procédé de fabrication d'une garniture de frottement, destinée à équiper un dispositif mettant en oeuvre un frottement sec, de forme générale annulaire plate et du type comportant un corps annulaire plat en matériau de frottement, dans lequel une ébauche du corps annulaire plat est réalisée par enroulement sur un mandrin d'une longueur déterminée d'une bande d'un mat d'un matériau de frottement, caractérisé en ce que, au cours de l'étape d'enroulement, on insère au moins un tronçon d'une bande de tissu de filaments de verre undirectionnel sens chaîne d'une longueur suffisante pour constituer au moins une zone annulaire de renfort pour l'obtention ultérieure d'une garniture de frottement conforme aux enseignements de l'invention.

Selon d'autres caractéristiques du procédé, le matériau constituant la garniture de frottement est réalisé de la manière suivante:
a) un mélange de fibres de même nature ou de natures différentes telles que définies ci-dessus, est réalisé dans un mélangeur ;
b) le mélange est cardé pour former un voile de carde ;
c) le voile de carde est nappé ;
d) du verre est incorporé au voile de carde au moment du nappage ;
   - entre les étapes b) et c) ci-dessus, des charges pulvérulentes sont saupoudrées sur le voile de carde ;
   - le cardage est effectué au moyen d'une carde type laine ;
e) le mat est mis à une épaisseur comprise entre 3 mm et 10 mm entre des plateaux chauffants ;
   - la température est comprise entré 50°C et 100°C ;
   - la pression est comprise entre 1 bar et 10 bars ;
g) le mat est découpé en bandes, de préférence dans le sens de la longueur ;
   - la largeur des bandes est comprise entre 8 et 25 mm ;
h) les bandes ainsi découpées sont soudées par lames chauffantes ;
   - la température des lames est comprise entre 50°C et 150° C ;
   - le recouvrement des bandes ainsi soudées est compris entre 3 mm et 20 mm ;
i) la bande soudée est enroulée sur un enrouleur, avec introduction du matériau de renfort, pourformer un anneau. De manière à réaliser un dispositif revêtu du matériau de frottement il est procédé, selon l'invention, comme suit :
j) un anneau, en variante une pluralité de secteurs formant un anneau, est découpé dans le mat réalisé comme indiqué ci-dessus ;
k) l'anneau ou la pluralité de secteurs formant un anneau, est placé dans le fond d'un moule ;
1) une cuisson sous pression est réalisée dans le moule.

L'invention propose aussi un disque de friction d'embrayage tournant mettant en oeuvre un frottement à sec, comportant au moins une garniture de frottement, caractérisé en ce que ladite garniture de frottement est conforme aux enseignements de l'invention.

Le disque d'embrayage tournant selon l'invention est aussi caractérisé en ce que la garniture de frottement a été obtenue selon le procédé conforme aux enseignements de l'invention.

Conformément à l'invention, on obtient une garniture de frottement qui présente de bonnes caractéristiques de frottement, de résistance à l'usure ainsi qu'aux effets de la force centrifuge.

L'invention permet avantageusement de réaliser des garnitures de frottement dont les caractéristiques de frottement de résistance à l'usure d'une part, et les caractéristiques de résistance mécanique aux effets de la force centrifuge peuvent être choisies et réglées séparément.

D'autres caractéristiques et avantages de l'invention apparaîtront à la lecture de la description détaillée qui suit pour la compréhension de laquelle on se reportera aux dessins annexés dans lesquels
- la figure 1 A est une vue schématique qui illustre une garniture annulaire de frottement selon l'état de la technique ;
- la figure 1 B est une vue similaire à celle de la figure 1 A qui illustre un premier exemple de réalisation d'une garniture de frottement conforme aux enseignements de l'invention ;
- la figure 1C est une vue similaire à celle de la figure 1 A qui illustre un deuxième exemple de réalisation de garniture de frottement conforme aux enseignements de l'invention ; et
- la figure 2 est un schéma qui illustre une partie d'une installation pour la mise en oeuvre d'un procédé de fabrication d'une garniture de frottement conforme aux enseignements de l'invention.

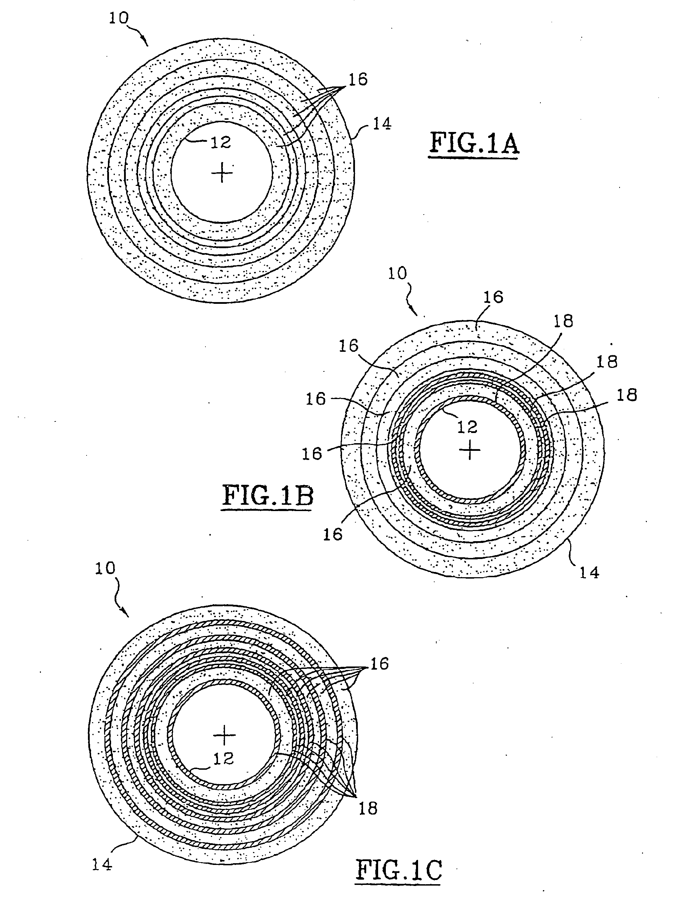

On a représenté sur la figure 1 A une garniture de frottement 10, selon l'état de la technique, de forme générale annulaire plate qui est délimitée par une surface cylindrique intérieure 12 et par une surface cylindrique extérieure 14.

Selon une conception connue, la garniture de frottement annulaire plate 10, ou tout au moins son ébauche avant les opérations finales de cuisson, est par exemple réalisée par enroulement sur un mandrin à diamètre réglable d'une bande d'un matériau de friction 16, puis par découpe de tranches du tube de matériau ainsi réalisé par enroulement.

C'est ainsi que la garniture de frottement se présente sous la forme d'une succession de couches adjacentes du mat de matériau de frottement.

Pour la constitution du matériau de frottement et sa fabrication, on pourra se reporter à ce qui est décrit ci-dessus ainsi qu'au contenu et aux exemples de la demande de brevet français FR 2 735 830 du 21 juin 1995.

Conformément aux enseignements de l'invention, et comme cela est illustré aux figures 1B et 1C, il est proposé d'améliorer la résistance à la rupture en centrifugation d'une telle garniture de frottement au moins au voisinage de sa surface cylindrique interne 12 par au moins une zone annulaire de renfort.

A cet effet, et comme on peut le voir par exemple à la figure 1 B, il est prévu plusieurs zones annulaires 18 de renfort qui sont agencées concentriquement et intercalées entre des zones annulaires correspondantes réalisées dans le matériau de frottement de base constitutif du corps annulaire plat 16 selon l'état de la technique.

Dans l'autre exemple de réalisation illustré à la figure 1C, c'est la totalité de la garniture annulaire de frottement 10 qui est renforcée, c'est-à-dire que des zones annulaires de renfort sont présentes depuis le voisinage de la surface cylindrique interne 12 jusqu'au voisinage de la surface cylindrique externe 14.

La structure et la composition d'une garniture renforcée telle que celle illustrée aux figures 1 B et 1C est, à titre d'exemple, la suivante.

A titre d'exemples, le mat de fibres constituant le matériau de frottement peut être réalisé à partir des six compositions pondérales de fibres suivantes exprimées en parties :

| **FIBRES** | **EXEMPLES** | | | | | |
|---|---|---|---|---|---|---|
| | **A** | **B** | **C** | **D** | **E** | **F** |
| PAN (polyacrylonitrile) ou PAN préoxydées | 15 | 13,6 | 12,4 | 9,3 | 8,5 | 7,7 |
| VERRE E | 5 | 4,6 | 4,2 | 9,3 | 8,5 | 7,7 |

La longueur moyenne des fibres utilisées est la suivante :
- fibres PAN : 42 mm ;
- fibres de verre : 50 mm.

Les fibres ou mélanges de fibres ci-dessus, réalisés dans un mélangeur, sont introduits dans la chargeuse d'un dispositif d'alimentation d'une carde de type laine qui comporte une cheminée d'alimentation. Des charges pulvérulentes sont saupoudrées en sortie de la carde, sur le voile de carde formé, au moyen d'un dispositif de saupoudrage.

Les charges pulvérulentes présentent la composition, suivante (composition pondérale rapportée aux parties de fibres ci-dessus) :

| **CHARGES PULVERULENTES** | **EXEMPLES** | | | | | |
|---|---|---|---|---|---|---|
| | **A** | **B** | **C** | **D** | **E** | **F** |
| Poussières de rectification de rectification de garnitures de frottement | 38,1 | 34,6 | 31,7 | 8,2 | 7,5 | 6,7 |
| Résine phénolique | 37,4 | 34,7 | 31,1 | 19,6 | 17,8 | 16,0 |
| Cardolite | 4,5 | 4,1 | 3,8 | | | |
| Caoutchouc nitrile | | | | 16,2 | 14,7 | 13,2 |
| Soufre | | | | 3,2 | 2,9 | 2,6 |
| Sulfate de baryte | | | | 12,9 | 11,7 | 10,5 |
| Magnésie | | | | 3,3 | 3,0 | 2,7 |
| Résine mélamine | | | | 18,0 | 16,6 | 15,2 |

Chaque zone annulaire de renfort 18 est un anneau d'une bande de tissu de verre qui est insérée à la bande de mat enroulé, lors de l'enroulement, comme cela sera expliqué par la suite.

Le tissu de renfort est un tissu unidirectionnel sens chaîne.

Le diamètre des filaments de verre qui le constituent est sensiblement égal à 17 micromètres.

Le tissu de renfort présente la composition suivante (composition pondérale rapportée aux parties pondérables de fibres et de charges pulvérulentes mentionnées précédemment) :

| **TISSU** | **EXEMPLES** | | | | | |
|---|---|---|---|---|---|---|
| | **A** | **B** | **C** | **D** | **E** | **F** |
| TISSU | 0 | 8,4 | 16,8 | 0 | 8,8 | 17,7 |
| UNIDIRECTIONNEL VERRE | | | | | | |

On comprend, à la lecture des trois tableaux de structure et de composition qui précèdent, que les exemples A et D sont des exemples sans tissu de renfort, c'est-à-dire des exemples correspondant à l'état de la technique illustré à la figure 1A, tandis que les exemples B, C, E et F sont des exemples de garnitures renforcées conformément aux enseignements de l'invention.

Les échantillons de garnitures réalisées à partir des six exemples qui précèdent ont été soumis à un test de centrifugation à froid et à chaud. Le test a été réalisé sur une centrifugeuse pouvant atteindre 20.000 tours par minute qui est équipée d'un variateur automatique de vitesse réglable, d'un tachymètre de contrôle et d'un système de chauffage de la chambre d'essai.

Les conditions d'essai ont été les suivantes.

Pour le test de centrifugation à froid, au démarrage de 0 à 4.500-5.000 tours par minute en 7 à 10 secondes, puis au-delà de 4.500-5.000 tours par minute, accélération constante de 5.000 tours par minute en 25 secondes, soit 3,33 tours par seconde².

Pour le test d'accélération à chaud, on a procédé à une accélération constante de 5.000 tours par minute en 25 secondes, soit 3,33 tours par seconde².

Lors de l'essai à chaud, le thermocouple de mesure de la température est placé dans le même plan que la couronne à tester.

Le résultat des essais est résumé dans le tableau ci-dessous :

| **RESISTANCE A LA CENTRIFUGATION EN tr/mn** | **EXEMPLES** | | | | | |
|---|---|---|---|---|---|---|
| | **A** | **B** | **C** | **D** | **E** | **F** |
| A froid-25°C | 15000 | 16500 | 17700 | 11400 | 13500 | 16300 |
| A chaud -200°C | 10800 | 13200 | 16500 | 8900 | 10900 | 12900 |

Dans ce tableau, les valeurs maximales du régime de rotation correspondent au début des phénomènes de rupture en centrifugation.

Dans le cas des trois premiers exemples A, B et C appartenant à une même famille de composition et de structure, on constate que la présence du tissu de renfort accroît de manière importante la résistance à la rupture en centrifugation tant à froid qu'à chaud.

Il en est de même dans le cas des trois autres exemples D, E et F appartenant à une autre famille de structure et de composition de la garniture.

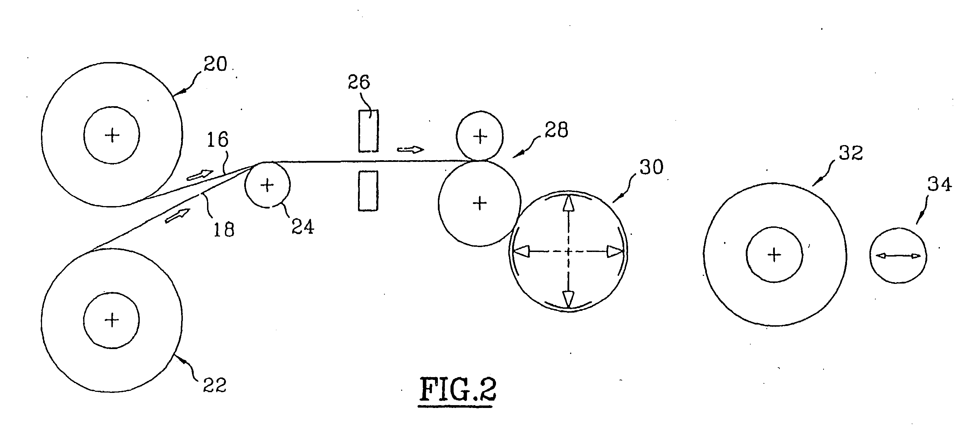

On décrira maintenant schématiquement un procédé de réalisation d'une garniture conforme aux enseignements de l'invention en se référant à la figure 2.

On a représenté sur cette figure un rouleau 20 de la bande de mat de matériau de frottement destiné à constituer les couches 16 et un rouleau 22 de dévidage de la bande de tissu de renfort destiné à constituer les couches annulaires de renfort 18.

Les deux bandes 16 et 18 sont rendues adjacentes par leur passage sur un rouleau fou intermédiaire 24, puis la vitesse et la longueur de défilement sont contrôlés par un capteur 26.

Les deux bandes sont associées entre elles en passant entre une paire de cylindres chauffant 28 pour être enroulées concentriquement sur un mandrin de diamètre réglable 30 pour constituer un tube 32 qui est ensuite découpé en tranches annulaires plates par des couteaux de refente 34.

Si les bandes 16 et 18 dévidées à partir des rouleaux 20 et 22 sont associées en continu, c'est-à-dire pendant l'enroulement d'un tube complet, on aboutit à la fabrication de garnitures de friction du type de celle illustrée à la figure 1C, c'est-à-dire une garniture qui comporte des couches annulaires de renfort sur toute sa surface, c'est-à-dire radialement depuis l'intérieur vers l'extérieur.

Si l'on veut obtenir une garniture renforcée seulement au voisinage de sa surface cylindrique intérieure 12, il faut interrompre l'alimentation en bande de tissu de renfort 18 à partir du rouleau 22 au bout d'un temps déterminé et poursuivre l'enroulement de la seule bande 16 pour la réalisation d'un tube 32.

Selon un procédé connu, les diamètres intérieur et extérieur du tube 32, c'est-à-dire des garnitures 10 ensuite découpées, résultent, du choix des diamètres du mandrin réglable et de la longueur de(s) bande(s) enroulée(s) sur le mandrin.

## Revendications

1. Garniture (10) de frottement, destinée à équiper un dispositif mettant en oeuvre un frottement sec, de forme générale annulaire plate (10) et du type comportant un corps annulaire plat en matériau de frottement (16) délimité par des surfaces cylindriques intérieure (12) et extérieure (14), et qui comporte au moins une zone annulaire de renfort (18) insérée dans le matériau de frottement (16) **caractérisé en ce que** la zone de renfort (18) est un anneau d'une bande de tissu de filaments de verre unidirectionnel sens chaîne.

2. Garniture selon la revendication 1, **caractérisée en ce que** la zone annulaire de renfort (18) est agencée au voisinage de la surface cylindrique intérieure (12) de la garniture (10).

3. Garniture selon la revendication 1, **caractérisée en ce qu'**elle comporte plusieurs zones annulaires (18) de renfort agencées sensiblement concentriquement.

4. Garniture selon la revendication 3, **caractérisée en ce que** les zones annulaires de renfort (18) sont agencées sensiblement concentriquement à partir du-voisinage de la surface cylindrique intérieure (12) de la garniture (10).

5. Garniture selon l'une des revendications 3 ou 4, **caractérisée en ce qu'**elle comporte plusieurs zones annulaires de renfort (18) agencées sensiblement concentriquement et réparties sur la totalité de la garniture (10) entre les surfaces cylindriques intérieure (12) et extérieure (14) de cette dernière.

6. Garniture selon l'une quelconque des revendications 3 à 5, **caractérisée en ce que** les zones annulaires de renfort (18) sont réalisées dans un matériau de même densité.

7. Garniture selon l'une quelconque des revendications 3 à 5, **caractérisée en ce que** les zones annulaires de renfort (18) sont réalisées dans des matériaux de densités différentes.

8. Garniture selon la revendication 7 prise en combinaison avec la revendication 4, **caractérisée en ce que** les zones annulaires de renfort (18) sont réalisées dans des matériaux de densités différentes et décroissantes à partir du voisinage de la surface cylindrique intérieure (12) de la garniture.

9. Garniture selon l'une quelconque des revendications précédentes, **caractérisée en ce que** chaque zone annulaire de renfort (18) est un anneau de renfort formé d'une couche cylindrique sensiblement annulaire insérée dans le corps annulaire plat.

10. Garniture selon l'une quelconque des revendications précédentes, **caractérisé en ce qu'**elle comprend un matériau de frottement constitué par un mat de fibres imprégné d'une résine thermodurcissable.

11. Garniture selon la revendication 10, **caractérisé en ce que** lesdites fibres présentent une longueur comprise entre 40 mm et 120 mm.

12. Procédé de fabrication d'une garniture de frottement (10), destinée à équiper un dispositif mettant en oeuvre un frottement sec, de forme générale annulaire plate et du type comportant un corps annulaire plat en matériau de frottement, dans lequel une ébauche du corps annulaire plat est réalisée par enroulement sur un mandrin (30) d'une longueur déterminée d'une bande d'un mat de matériau de frottement (16), **caractérisé en ce que**, au cours de l'étape d'enroulement, on insère au moins un tronçon d'une bande (18) de tissu de filaments de verre unidirectionnel sens chaîne d'une longueur suffisante pour constituer au moins une zone annulaire de renfort pour l'obtention ultérieure d'une garniture de frottement conforme à l'une quelconque des revendications précédentes.

13. Disque de friction d'embrayage tournant mettant en oeuvre un frottement à sec, comportant au moins une garniture de frottement (10), **caractérisé en ce que** ladite garniture de frottement est conforme à l'une quelconque des revendications 1 à 11.

14. Disque de friction d'embrayage tournant selon la revendication précédente, **caractérisé en ce que** la garniture de frottement (10) a été obtenue selon le procédé conforme à la revendication 12.

## Claims

1. Friction lining (10), intended to equip a device using dry friction, with a flat annular shape (10) overall, and of the type comprising a flat annular body made from friction material (16) delimited by internal (12) and external (14) cylindrical surfaces, and which comprises at least one annular reinforcement area (18) inserted in the friction material (16), **characterised in that** the reinforcement area (18) is a ring made from a strip of glass filament fabric unidirectional in the warp direction.

2. Lining according to claim 1, **characterised in that** the annular reinforcement area (18) is arranged in the vicinity of the internal cylindrical surface (12) of the lining (10).

3. Lining according to claim 1, **characterised in that** it comprises several annular reinforcement areas (18) arranged substantially concentrically.

4. Lining according to claim 3, **characterised in that** the annular reinforcement areas (18) are arranged substantially concentrically from the vicinity of the internal cylindrical surface (12) of the lining (10).

5. Lining according to one of claims 3 or 4, **characterised in that** it comprises several annular reinforcement areas (18) arranged substantially concentrically and distributed over the whole of the lining (10) between the internal (12) and external (10) cylindrical surfaces of the latter.

6. Lining according to any one of claims 3 to 5, **characterised in that** the annular reinforcement areas (18) are produced from materials with the same density.

7. Lining according to any one of claims 3 to 5, **characterised in that** the annular reinforcement areas (18) are produced from materials with different densities.

8. Lining according to claims 7 taken in combination with claim 4, **characterised in that** the annular reinforcement areas (18) are produced from materials with different densities decreasing from the vicinity of the internal cylindrical surface (12) of the lining.

9. Lining according to any one of the preceding claims, **characterised in that** each annular reinforcement area (18) is a reinforcing ring formed from a substantially annular cylindrical layer inserted in the flat annular body.

10. Lining according to any one of the preceding claims, **characterised in that** it comprises a friction material consisting of a mat of fibres impregnated with a thermosetting resin.

11. Lining according to claim 10, **characterised in that** the said fibres have a length of between 40 mm and 120 mm.

12. Method of manufacturing a friction lining (10) intended to equip a device using dry friction, with a flat annular shape overall and of the type comprising a flat annular body made from friction material, in which a blank of the flat annular body is produced by winding, on a tube (30) of a given length, a strip of a mat of friction material (16), **characterised in that**, during the winding step, at least one portion of a strip (18) of glass filament fabric unidirectional in the warp direction is inserted, with a sufficient length to constitute at least one annular reinforcement area for the subsequent obtaining of a friction lining in accordance with any one of the preceding claims.

13. Rotating clutch friction disc using dry friction, comprising at least one friction lining (10), **characterised in that** the said friction lining is in accordance with any one of claims 1 to 11.

14. Rotating clutch friction disc according to the preceding claim, **characterised in that** the friction lining (10) was obtained according to the method in accordance with claim 12.

## Patentansprüche

1. Reibbelag (10) zur Ausrüstung einer Trockenreibungsvorrichtung mit allgemein flacher Ringform (10) und mit einem flachen ringförmigen Körper aus Reibwerkstoff (16), der durch zylindrische Innen- (12) und Außenflächen (14) begrenzt ist, und der wenigstens eine in den Reibwerkstoff (16) eingefügte ringförmige Verstärkungszone (18) umfasst,
**dadurch gekennzeichnet,**
**dass** die Verstärkungszone (18) ein Ring aus einem Band aus in Kettenrichtung einseitig gerichtetem Glasfasergewebe ist.

2. Reibbelag nach Anspruch 1, **dadurch gekennzeichnet, dass** die ringförmige Verstärkungszone (18) in der Nähe der zylindrischen Innenfläche (12) des Reibbelags (10) angeordnet ist.

3. Reibbelag nach Anspruch 1, **dadurch gekennzeichnet, dass** er mehrere in etwa konzentrisch angeordnete ringförmige Verstärkungszonen (18) umfasst.

4. Reibbelag nach Anspruch 3, **dadurch gekennzeichnet, dass** die ringförmigen Verstärkungszonen (18) in etwa konzentrisch von der Nähe der zylindrischen Innenfläche (12) des Reibbelags (10) aus angeordnet sind.

5. Reibbelag nach einem der Ansprüche 3 oder 4, **dadurch gekennzeichnet, dass** er mehrere ringförmige Verstärkungszonen (18) umfasst, die in etwa konzentrisch angeordnet und auf der Gesamtheit des Reibbelags (10) zwischen den zylindrischen Innen- (12) und Außenflächen (14) dieses Reibbelags verteilt sind.

6. Reibbelag nach einem der Ansprüche 3 bis 5,**dadurch gekennzeichnet, dass** die ringförmigen Verstärkungszonen (18) aus einem Werkstoff mit gleicher Dichte ausgeführt sind.

7. Reibbelag nach einem der Ansprüche 3 bis 5, **dadurch gekennzeichnet, dass** die ringförmigen Verstärkungszonen (18) aus Werkstoffen mit unterschiedlichen Dichten ausgeführt sind.

8. Reibbelag nach Anspruch 7 in Kombination mit Anspruch 4, **dadurch gekennzeichnet, dass** die ringförmigen Verstärkungszonen (18) aus Werkstoffen mit unterschiedlichen und von der Nähe der zylindrischen Innenfläche (12) des Reibbelags aus abnehmenden Dichten ausgeführt sind.

9. Reibbelag nach einem der vorangehenden Ansprüche, **dadurch gekennzeichnet, dass** jede ringförmige Verstärkungszone (18) ein Verstärkungsring ist, der aus einer in etwa ringförmigen zylindrischen Schicht besteht, die in den flachen ringförmigen Körper eingefügt ist.

10. Reibbelag nach einem der vorangehenden Ansprüche, **dadurch gekennzeichnet, dass** er einen Reibwerkstoff umfasst, der durch eine mit einem Duroplast imprägnierte Fasermatte gebildet ist.

11. Reibbelag nach Anspruch 10, **dadurch gekennzeichnet, dass** die besagten Fasern eine Länge zwischen 40 mm und 120 mm aufweisen.

12. Verfahren zur Herstellung eines Reibbelags (10) zur Ausrüstung einer Trockenreibungsvorrichtung mit allgemein flacher Ringform und mit einem flachen ringförmigen Körper aus Reibwerkstoff, wobei ein Vorformling des flachen ringförmigen Körpers durch die auf einem Wickeldorn (30) erfolgende Aufwicklung einer bestimmten Länge eines Bands einer Matte aus Reibwerkstoff (16) ausgeführt wird, **dadurch gekennzeichnet, dass** während des Aufwickelschritts wenigstens ein Teilstück eines Bands (18) aus in Kettenrichtung einseitig gerichtetem Glasfasergewebe mit einer ausreichenden Länge eingefügt wird, um wenigstens eine ringförmige Verstärkungszone zur nachfolgenden Anfertigung eines Reibbelags nach einem der vorangehenden Ansprüche zu bilden.

13. Rotierende Reibungskupplungsscheibe, die mit Trockenreibung arbeitet und wenigstens einen Reibbelag (10) umfasst, **dadurch gekennzeichnet, dass** der besagte Reibbelag nach einem der Ansprüche 1 bis 11 ausgeführt ist.

14. Rotierende Reibungskupplungsscheibe nach dem vorangehenden Anspruch, **dadurch gekennzeichnet, dass** der Reibbelag (10) nach dem Verfahren nach Anspruch 12 hergestellt worden ist.
